# EUROPEAN PATENT SPECIFICATION

(11) **EP 2 382 610 B1**
(45) Date of publication and mention of the grant of the patent: **30.09.2015**
(21) Application number: 09796038.9
(22) Date of filing: 19.11.2009
(51) Int. Cl.: G09B 19/00

(54) **MOBILE TRAINING UNIT**
MOBIL-TRAININGSEINHEIT
UNITÉ DE FORMATION MOBILE

(30) Priority: 19.12.2008 GB 0823183
(43) Date of publication of application: 02.11.2011
(73) Proprietor: Technip France, 92400 Courbevoie (FR)
(72) Inventor: EATOCK, Darren, Manchester M26 1RF (GB); GILMOUR, Fraser, Aberdeenshire AB14 0WN (GB); SHAW, Kenneth, Aberdeenshire AB51 4TB (GB); ANDERSON, Hugh, Aberdeenshire AB31 5YX (GB)
(74) Representative: Earnshaw, Geoffrey Mark
(86) International application number: PCT/GB2009/051571
(87) International publication number: WO 2010/070307

(56) References cited:
- US-A- 203 517
- US-A- 3 500 648
- US-A- 4 531 613
- US-A1- 2005 233 289
- US-B1- 6 799 975
- US-B1- 7 244 123

## Description

The present invention relates to a mobile training unit, particularly but not exclusively based on an ISO '40 foot' cargo container and able to provide training in relation to confined /enclosed spaces, working at height, fall potential and rescue situations.

Training of operatives to work in particular situations such as confined spaces, heights, and the like, can be carried out at dedicated training centres. However, such training facilities generally only provide one sort of training, and are usually provided by costly third party vendors within their own premises. Furthermore, there is the additional cost of bringing personnel to each and every type of facility required. Such costs increase where training is related to water-based, sea or off-shore situations, especially training in relation to working on sea-going vessels and off-shore facilities like oil rigs and platforms.

US 7,244,123 B1 shows a self-contained training device for simulated personnel entry, exit and rescue in confined space scenarios. The training device features an enclosed tank mounted on a truck trailer. However, the training device of US 7,244,123 B1 is only based on (and fixed to) a truck trailer, with facilities designed for confined space scenarios only.

It is an object of the present invention to provide an improved multipurpose mobile training unit.

Thus, according to one aspect of the present invention, there is provided a mobile training unit comprising a transportable cargo container having a transport position and at least one training position, the cargo container comprising:
(a) at least one confined working compartment wholly or substantially within the cargo container dimensions;
(b) at least one cargo container wall portion movable between a closed transport position and an open training position;
(c) at least one door for entry into and exit from the cargo container; and
(d) a tower movable between a transport position within the cargo container dimensions, and a training position extending beyond the cargo container:
   characterised in that the cargo container comprises a cuboid shape having two parallel elongate sidewalls and a top surface, at least a portion of each elongate sidewall being movable between parallel closed transport positions, and aligned open training positions on either side of the top surface of the cargo container which together form a raised platform able to provide a moonpool effect.

The mobile training unit of the present invention in its transport position provides a very convenient unit for easy transportation to different locations where training is necessary or desired. This mobile training unit can at least supply facilities to provide training in relation to confined /enclosed spaces, working at height, fall potential and rescue situations

The cargo container could have a multitude or plurality of training positions. The or each training position could be based on static and/or dedicated areas in the cargo container, and/or the movement of one or more portions of the mobile training unit and/or one or more portions of the cargo container between a transport position and one or more training positions. This can include movement of one or more portions of a surface of the cargo container, such as one or more portions of any side walls. This can also include movement of one or more portions of the mobile training unit within the cargo container, including but not limited to the tower and/or one or more other additional apparatus of the mobile training units such as guard rails and the like, as well as the movement of one or more internal surfaces such as internal dividers, walls, partitions, etc.

The or each portion of the mobile training unit and/or cargo container moveable between a transport position and a training position may be moveable to one or more different training positions.

Two or more portions of the mobile training unit and/or cargo container moveable between a transport position and a training position may be moveable in conjunction or association with each other.

The cargo container may be of any suitable size, shape or design. The cargo container is preferably a regular shape in its transport position, increasing its ability to be conveniently transported and/or located in use.

In one embodiment of the present invention, the cargo container in its transport position is a wholly or substantially a right cuboid or a rectangular cuboid shape, i.e. a rectangular cross-section box, at least in its transport position.

The cargo container may comprise: at least two sidewalls, a top or top surface, a base, and at least one, usually two, end portions, able together to create an enclosure, preferably a securable enclosure, in its transport position.

In a particular embodiment of the present invention, the cargo container is based on an ISO standard container design, such as the known standard 40ft container being approximately 12.2m long. Thus, the cargo container may have the dimensions of an ISO standard (e.g. 40ft (12.2m)) container, and/or be formed from an ISO standard (e.g. 40ft (12.2m) container), so as to have the ISO standard container design.

Table 1 below provides typical dimensions of a 40ft (12.2m) container suitable for the present invention.

**Table 1**

| | | 40' Container | |
|---|---|---|---|
| | | Imperial | Metric |
| External dimensions | Length | 40' 0" | 12.192 m |
| | Width | 8' 0" | 2.438 m |
| | Height | 8'6" | 2.591 m |
| Internal Dimensions | Length | 39' 5 45/64" | 12.032 m |
| | Width | 7' 8 19/32" | 2.352 m |
| | Height | 7'9 57/64" | 2.385 m |
| Door Aperture | Width | 7' 8 1/8" | 2.343 m |
| | Height | 7' 5 3/4" | 2.280 m |

Conventional ISO 40ft (12.2m) containers are used for shipping and handling goods in many situations, including road and sea haulage.

The mobile training unit comprises a cargo container having at least one confined working compartment wholly or substantially within the cargo container dimensions. The or each confined working compartment preferably comprises a portion having dimensions smaller than the usual or expected non-constricted working conditions of an adult human, such as having a height or ceiling less than 1.5m high, such as a height or ceiling of only 1 m in height.

Preferably, one confined working compartment extends at least partly across the bottom of the cargo container, optionally across its width and substantially/wholly along its length.

The or each confined working compartment may include one or more internal obstacles designed to hinder the path or passage of a human therethrough from one or more entries to one or more exits.

The or each confined working compartment can provide a confined/enclosed space training situation that provides training for and/or involves one or more of the following features and obstacles;
1 m x 1 m passageways
At least 1 x vertical obstacle
At least 1 x right angle obstacle
At least 1 x horizontal obstacle
Multiple vessel entry points
Internal baffles
Offset vertical vessel entry points
Identifying Confined Spaces
Recognising Potential Hazards
Gas Testing and Atmosphere Monitoring
Access and Egress
Isolations
Entry Attendant
Personal Protective Equipment (PPE)
Respiratory Protective Equipment (RPE)
Tripod / Winch / Pulley Systems
Rescue - Horizontal and Vertical
Medical and Casualty Management
Risk Assessment and DRA
Permit to work (PTW)
Safe System of Work (SSOW)
Duties of Rescue Team and Standby Man
Breathing Apparatus, Universally, Full Duration, Airline, Escape Set

Preferably, the cargo container comprises a horizontal confined working compartment and a vertical confined working compartment.

The mobile training unit of the present invention comprises a cargo container having at least one cargo container wall portion movable between a closed transport position and an open training position. Preferably, the wall portion in its closed transport position is complementary with the remaining portion of the cargo container to create a regular shape, such as a cuboid, to maintain ease of transport.

The or each wall portion may be movable to the same or different open training positions.

Preferably, the or each wall portion is movable to an open training position being parallel to, optionally aligned or in line with, one or more other walls, top, bottom or end portions or surfaces of the cargo container.

In another embodiment of the present invention, one or more portions of the cargo container liaise with one or more of the wall portions in its open training position to provide a combined training area or location.

In the present invention, the cargo container comprises a cuboid shape having two parallel elongate sidewalls and a top surface, at least a portion of each elongate sidewall being movable between parallel closed transport positions, and aligned open training positions being aligned on either side of the top surface of the cargo container. In their aligned positions, the sidewall portions and the top surface form a raised platform able to provide a moonpool effect, for further training situations.

The mobile training unit of the present invention comprises a cargo container having at least one door for entry into and exit from the cargo container. Preferably, the cargo container comprises at least two doors. Optionally, each door comprises one or more door parts.

In one embodiment of the present invention, the cargo container has a cuboid shape comprising two end portions, and at least one end portion, preferably both end portions, comprising at least one door, preferably two oppositely hinged doors able to at least partly, optionally substantially, or wholly, to fully open or access the rectangular cross-section of the cargo container.

The cargo container may also comprise one or more other doors, man holes or portals, including but not limited to hatchways, in one or more of its walls, top, base, end portions or other surfaces. By one of example only, the cargo container may comprise at least one, preferably two or more hatchways along its top surface.

One or more such additional door and/or portals may provide entry into and exit from at least one of the confined working compartments in the cargo container.

The cargo container may also comprise one or more windows or other viewing portals. Such windows or viewing portals can allow vision by personnel from outside the cargo container during training.

The mobile training unit of the present invention comprises a cargo container having a tower movable from a transport position within the cargo container dimensions and a training position extending beyond the cargo container. The tower may comprise any shape, size or dimensions preferably able to fit within the cargo container during its transportation.

The tower may extend from any part or portion of the cargo container in one or more directions or in one or more changing directions.

In one embodiment of the present invention, the tower extends wholly or substantially perpendicularly to its transport position within its cargo container.

In another embodiment of the present invention, the tower extends in its training position from or through the top or top surface of the cargo container.

In another embodiment of the present invention, the tower has a length of at least 1 m, preferably at least 2-4m.

The tower may have an irregular shape. Preferably, the tower has a regular shape, such as having a square, triangular or circular cross-section, and has one or more climbing facilities therealong useable in its training position. Suitable climbing facilities include ladders or other height-changing passageways, optionally located within the tower, outside the tower, or both.

The tower can provide a working at height situation that provides height and rescue training for and/or involves one or more of the following features and obstacles;
Climbing Tower for fall arrest, work positioning, rope access and emergency evacuation
Height changing passageways and ladder access penetrating hatchways onto walkway
Ladder access with back scratcher stepping onto walkway
Stairway
Collective fall protection (i.e. handrails, toe boards) - to specification
Step off points
Moonpool type scenario
Open hatchway on deck scenario
Anchor points (to withstand 12 and 22 kn)
Fall arrest demonstration rig (Hydraulic A frame to carry out drop weight tests
Anchor davit for emergency evacuation device
Work restraint, work positioning and fall arrest, emergency evacuation situations, inertia reels.

The mobile training unit may comprise one or more further apparatus or devices or attachments movable between a transport position and one or more training positions, and be able, singularly or in combination with one or more other embodiments described herein, to provide one or more further training scenarios. Such further apparatus, devices or attachments may be separable from the cargo container between the transport position and the training position(s), and/or extend from the cargo container or a portion thereof to increase the similarity of the training scenario with the real working locations.

In another embodiment of the present invention, all equipment, apparatus, devices and/or other facilities or functions of the mobile training unit can be locatable within the cargo container dimensions for transportation thereof. In this way, the cargo container, especially when it is a regular shape such as a 40ft (12.2m) ISO container, is as efficiently transportable as existing 40ft (12.2m) ISO containers used for transportation of goods.

The present invention encompasses all combinations of various embodiments or aspects of the invention described herein. It is understood that any and all embodiments of the present invention may be taken in conjunction with any other embodiment to described additional embodiments of the present invention. Furthermore, any elements of an embodiment may be combined with any and all other elements of any of the embodiments to describe additional embodiments.

An embodiment of the present invention will now be described by example only, and with reference to the accompanying drawings in which:
Figure 1 comprises a series of six views of a mobile training unit in a transport position according to one embodiment of the present invention;
Figure 2 comprises a series of six similar views of the mobile training unit of Figure 1 in a first possible training position;
Figure 3 is a perspective view of the mobile training unit of Figure 1;
Figure 4 is a perspective view of the mobile training unit of Figure 1 with the addition of removable guard rails, taken from storage within the cargo container during transportation to the training positions shown;
Figure 5 is a perspective view of the mobile training unit of Figure 1, showing two moveable wall portions in training positions to provide a working platform; and
Figure 6 is a perspective view of the mobile training unit of Figure 1 showing the tower in its vertical training position.

The mobile training unit of the present invention can provide an economical and mobile unit that is reliable, durable, and flexible enough to provide both working at height, advanced rescue, and confined space training.

The mobile training unit is easy and convenient to use, and its mobility means it can be deployed to various locations. The mobile training unit can therefore bring the training to the user or client, rather than the client to the training thus significantly saving man-hours, and as a result of this, the unit provides a more cost effective solution to training that also reduces the impact on personnel utilisation and leave time.

The mobile training unit is able to supply a safe and controlled environment for providing trainees with the knowledge and skills required to work safely at height, and/or in and around confined and enclosed spaces. With input from experienced instructors, the unit can be designed or adapted to accurately replicate or duplicate the challenges and problems found around many types of workplaces and workplace situations whilst working at height or in confined/enclosed spaces. This includes but is not limited to those work situations found on sea-going vessels.

The mobile training unit can incorporate performance based learning techniques. Constant instructor supervision can allow mistakes by users to be immediately corrected when necessary. The training unit and the exercises that it facilitates can be standardised to achieve a high level of effectiveness. Standardisation means the training can be consistent. This provides continuity for personnel and teams when working in or on differing or different workplace situations and sites.

The mobile training unit is preferably housed within and fabricated around an ISO standard 40 ft (12.2m) container. The use of a cargo container as the base structure can greatly reduce the cost of providing such a training unit, as such containers are readily available and can possibly be purchased and then modified. Efficiencies that come with established manufacturing procedures result in cargo containers being relatively inexpensive. The mobile training unit preferably abides by all necessary specifications for Shipping and Road Transportation.

The mobile training unit preferably has one or more of the following criteria:

| | |
|---|---|
| Mobility | Such a training unit should be completely mobile, meaning training can be done at any site, eliminating the need for trainees to travel. Housing the training unit in an ISO standard-type container allows easy and convenient transportation by sea and road. |
| Realism | Such a training unit should be able to carefully replicate many of the problems encountered regularly by workers and rescuers in confined spaces and when working at height. |
| Safety | Such a unit should provide a safe and controllable learning environment that allows constant instructor supervision where trainee mistakes can be |
| | immediately detected and corrected. This can include multiple access and egress points for quick rescue. |
| Professionalism | Such a training unit should to provide all the necessary equipment for trainees to be trained, tested and certified to the necessary levels of professional competence. |
| Cost | Such a unit should seriously reduce the costs of training by removing the need for travel. Although training is on site it remains out with critical paths, so there is no disruption to operations. Training may be scheduled to work around employee availability and shift schedules. |
| Efficiency | Training and the unit should be designed to optimise the number of trainees taking part at any one time, i.e. the possibility of simultaneous working at height, and advanced rescue training. |
| Independence | Set-up of such a unit from the transported container should happen with minimum input from equipment that is not part of the container unit. This reduces the need for crane time, forklifts, and other machinery. |

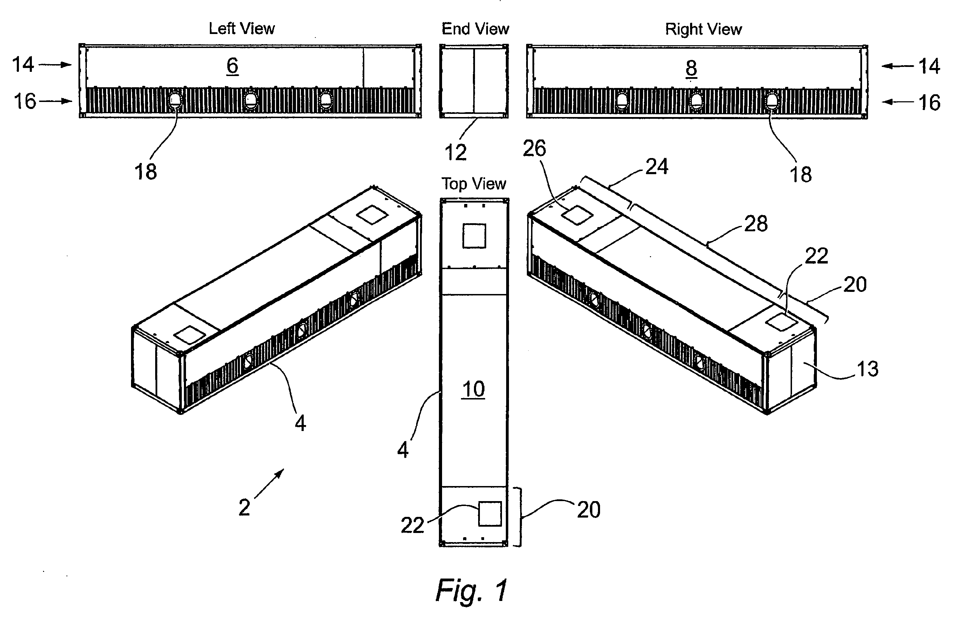

Referring to the drawings, Figure 1 shows left, end, right, left iso, top and right iso views of a mobile training unit in a transport position, according to one embodiment of the present invention. The mobile training unit 2 comprises a cargo container 4 having the dimensions of an ISO 40ft (12.2m) cargo container, being based on and/or adapted from a known ISO 40ft cargo container design.

The cargo container 4 has a cuboid shape having two elongate sidewalls 6, 8, a top 10, a base (not shown) and two end portions 12, which together form a securable enclosure for easy transportation. Each end portion 12 has two doors 13.

Each sidewall 6, 8 comprises an upper wall portion 14 and a lower wall portion 16. Each lower wall portion 16 includes three man holes 18 spaced therealong.

The top 10 shows an arrangement for the division of at least the upper space within the cargo container 4 into three portions, comprising a first area that could define a first confined working compartment 20 having a first hatchway 22, a second area that could define a second confined working compartment 24 at the opposite end of the cargo container 4 to the first compartment 20, and having a second hatchway 26, and a middle portion 28 further described hereinafter.

Figure 1 shows the cargo container 4 in its transport or transportable position or set-up. The regular shape of this set-up means that transportation is made easy, be it on the back of a lorry, trailer or on a rail-carriage for land transportation, as well as easily transportable on a seagoing vessel, in the same manner as conventional ISO 40ft (12.2m) containers.

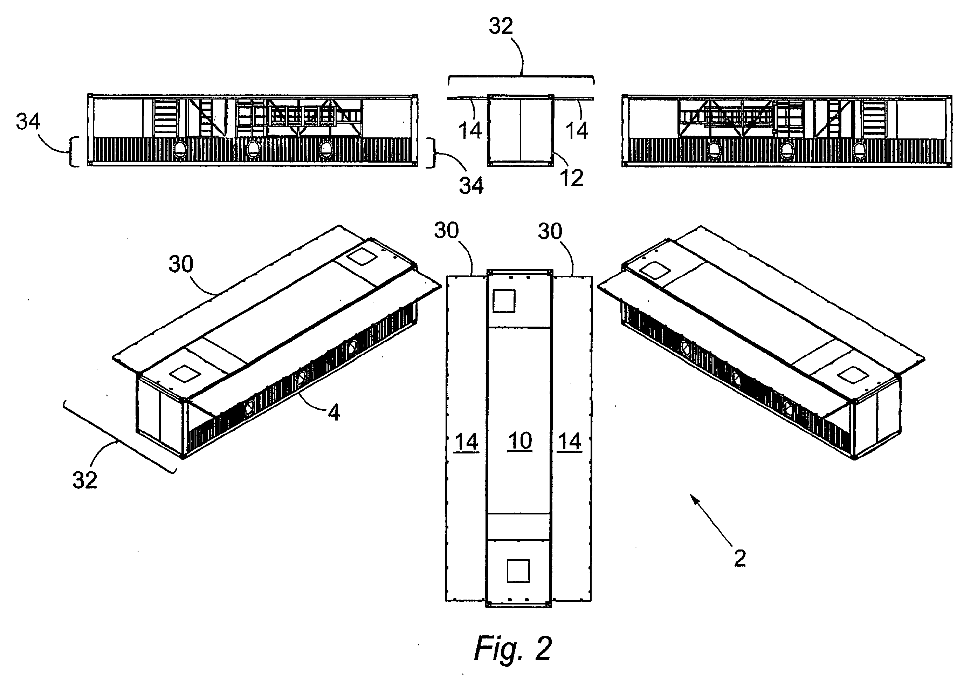

Figure 2 shows the same left, end, right, left iso, top and right iso views of the cargo container 4 shown in Figure 1, now in a first training position. In this first training position, the upper wall portions 14 of the two longitudinal side walls 6, 8 have been moved from their transport position as shown in Figure 1 (being in alignment with the lower wall portions 18 of the sidewalls 6, 8 so as to form flat sidewall surfaces), to perpendicular raised open training positions 30, being parallel with the top 10, and wholly or substantially in alignment with the top 10, so as to form overall a raised platform area 32 that spans across the top of the cargo container 4. Any suitable means of adjustment, such as one or more hydraulic rams (not shown), for example two rams per upper wall portion 14, can be used to provide movement of the upper wall portions 14 in this way.

The raised platform area 32 creates a training scenario realistic to sea-going vessels. The raised platform area 32 also provides shade under the open training positions 30 of the upper wall portions 14, which could be useful when the mobile training unit 2 is located in warmer climates.

Confined/enclosed space training in the mobile training unit 2 can be provided in a 1 m high area 34 along at least part of, optionally along substantially or all of, the bottom of the cargo container 4 in line with the lower wall portions 16 of the side walls 6,8. This confined space area 34 may also be connected to and/or utilise a 6' x 8' x 8'6" (1.8m x 2.4m x 2.6m) section in the cargo container 4 for vertical confined space training.

The confined space area 34 may extend across the entire width of the container's floor, and have within it features and obstacles to provide confined working training as herein described above. This area 34 can provide a horizontal element of the confined space training. This can involve users, trainees or other personnel travelling from one end of the container 4 to the other while overcoming obstacles. Obstacles encountered in this area 34 can include vessel hatch entry, horizontal passageways, right angle obstacles and internal baffles.

A vertical element of confined space training can be provided by the use of a split level 6' x 8' x 8'6" (1.8m x 2.4m x 2.6m) area, for example in the first confined compartment 20 at one end of the container 4. This first compartment 20 can include two levels with offset vessel hatchways 22 leading to a platform on top of the container 4. The platform can provide a location for situating a portable tripod (not shown) for performing vertical rescues.

Moveable and replaceable features, such as moveable/replaceable walls and drop down hatches can bring variation to the training scenarios. For example, wall panels in different sizes and dimensions can be provided so that the interior of the container 4 may be configured or partitioned into a multitude of spaces, compartments, rooms or areas of different sizes and shapes to assist in training.

Access to the confined space area 34 may be possible from multiple locations, such as through a 6' x 4' x 8'6" (1.8m x 1.2m x 2.6m) storage area, the vessel hatch entries 22, 26, and/or through the double doors 13 located at each end 12 of the container 12, or optionally just at the split level vertical confined space.

Ventilation to the confined space area 34 can be provided by man holes 18, windows, or other viewing ports, and/or access doors in the sidewalls 6, 8, and/or sections of grillage across the upper surface or top 10. The ports and hatches, etc. may be selectively opened to provide the desired amount of ventilation.

In addition to viewing windows, one or more ventilation hatches could be provided in the or an upper surface of the container.

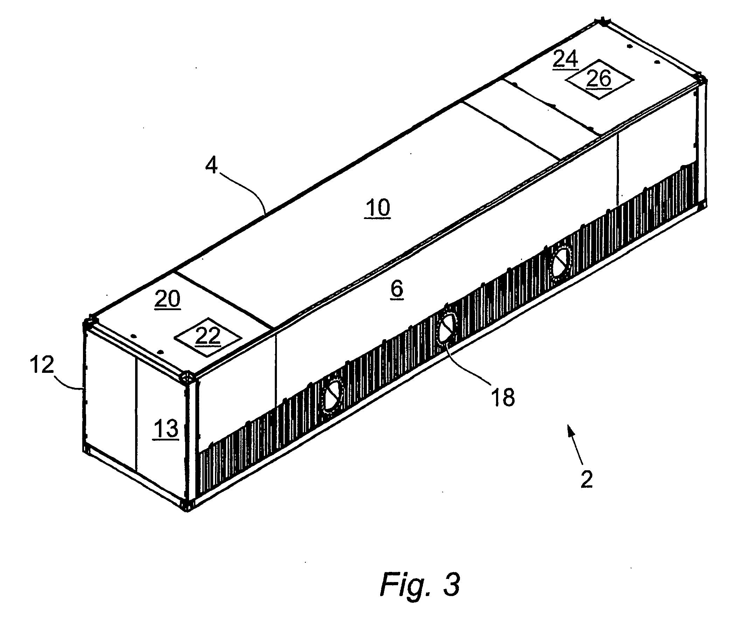

Figure 3 shows a perspective view of a mobile training unit 2 being a cargo container 4 as shown in the left iso view of Figure 1.

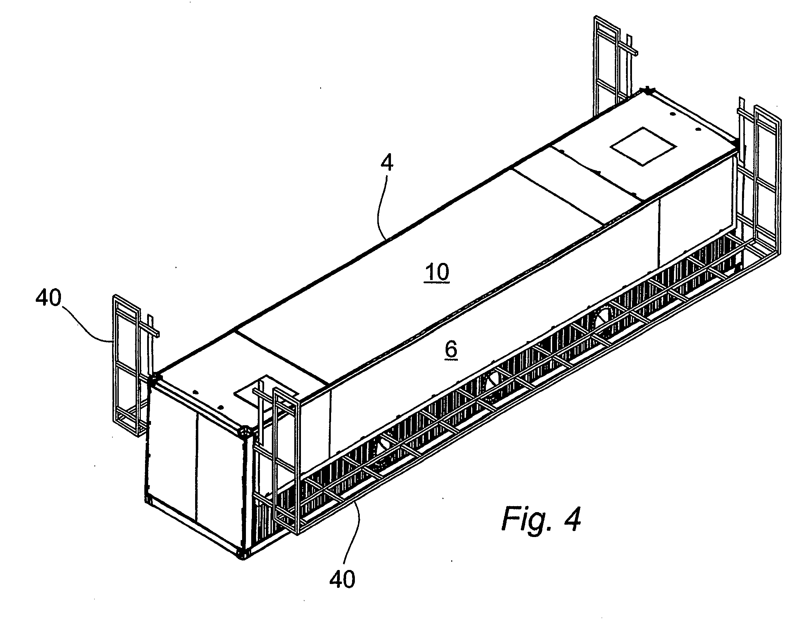

Figure 4 shows an option of providing one or more guide rails, such as two sets of guide rails 40, from a storage location within the cargo container 4 to be located on the sides of the cargo container 4, preferably extending around three sides of each upper wall portion 14 of each sidewall 6, 8 in a transverse direction as shown in Figure 4.

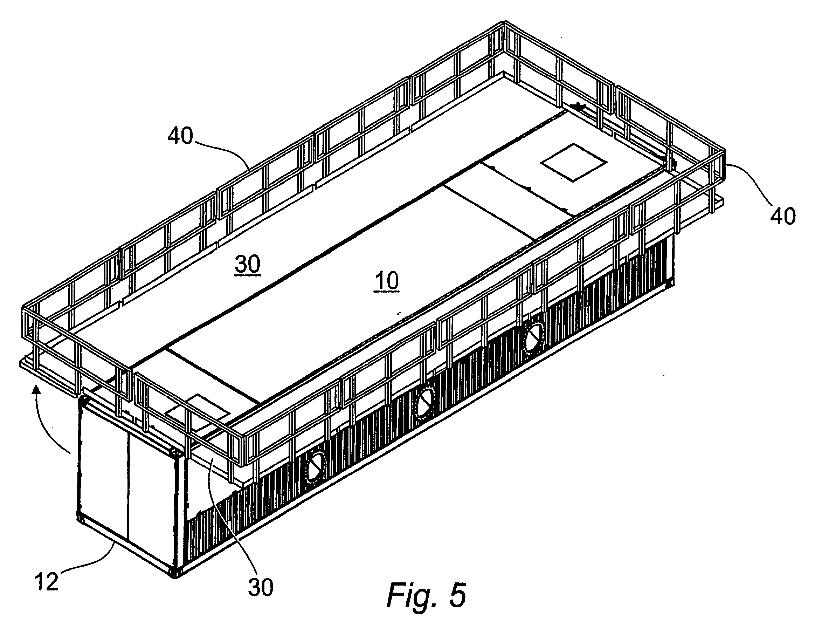

Figure 5 shows a perspective view of the upper wall portions 14 of the sidewalls 6, 8 in their open training positions 30 as shown in Figure 2, in combination with the guide rails 40 therearound. This provides a raised platform area with guide rail safety.

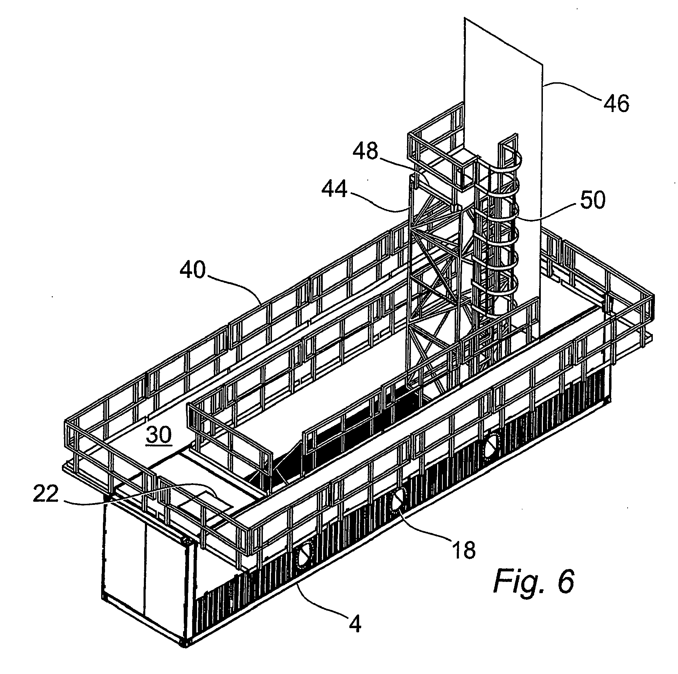

Figure 6 shows the cargo container having a tower 44, movable from a transport position within the cargo container dimensions, as shown in Figures 1-5, to a training position as shown in Figure 6 extending beyond the cargo container 4. The tower 44 is attached to a panel 46, which can equate to the middle portion 28 of the top 10 of the container 4 as shown in Figure 1.

Any suitable means of adjustment, such as one or hydraulic rams, permit movement of the tower 44 from its stored transport position to its vertical training position. Such hydraulic rams or the like can be positioned in the available space of a 6' storage and power compartments.

The tower 44 provides for the working at height training. The moveable tower section can be 12ft (3.7m) in height, and when combined with the existing 8ft container height, provides a 20ft (6.6m) overall height. The width of the tower 44 can be 5ft (1.5m), and length 4ft (1.2m), so that the tower 44 can fit within the overall container dimensions of a known ISO 40ft (12.2m) container.

The tower's structure can be constructed of 40mm x 40mm box steel, which provides adequate strength and size for training routines.

Incorporated in the tower 44 is an internal ladder to provide access to a platform 48 situated on top of the tower 44 via a hatchway in the platform flooring. This internal ladder can be located on the inside of the tower's aft face, being the panel 46.

A backscratcher ladder 50 or ladder with safety-cage is mounted on the outside of the tower's side to run the full length of the tower 44. A removable/extendable ladder portion can be added to the backscratcher ladder 50 or ladder with safety-cage to extend it to a lower platform within the container 4. The platform 48 situated on top of the tower 44 is accessible from the backscratcher ladder 50 or ladder with safety-cage through a secure gate (not shown).

Located on top of the tower 44 could also be a removable davit for inertia reel and emergency evacuation.

The tower 44 and its environs provide training in relation to working at height situations.

Various modifications and variations to the described embodiments of the invention will be apparent to those skilled in the art without departing from the scope of the invention as defined in the claims. Although the invention has been described in connection with specific preferred embodiments it should be understood that the invention as defined in the claims should not be unduly limited to such specific embodiments.

## Claims

1. A mobile training unit comprising a transportable cargo container (4) having a transport position and at least one training position, the cargo container (4) comprising:
(a) at least one confined working compartment (20) wholly or substantially within the cargo container dimensions;
(b) at least one cargo container wall portion (14) movable between a closed transport position and an open training position;
(c) at least one door (13) for entry into and exit from the cargo container (4); and
(d) a tower (44) movable between a transport position within the cargo container dimensions, and a training position extending beyond the cargo container (4);
**characterised in that** the cargo container (4) comprises a cuboid shape having two parallel elongate sidewalls (6, 8) and a top surface (10), at least a portion of each elongate sidewall (6, 8) being movable between parallel closed transport positions, and aligned open training positions on either side of the top surface (10) of the cargo container (4) which together form a raised platform able to provide a moonpool effect.

2. A mobile training unit as claimed in claim 1 wherein the cargo container (4) in its transport position is a wholly or substantially cuboid shape.

3. A mobile training unit as claimed in claim 2 wherein the cargo container (4) has the dimensions of an ISO 40ft (12.2m) container.

4. A mobile training unit as claimed in claim 2 wherein the cargo container (4) has an ISO 40ft (12.2m) container design.

5. A mobile training unit as claimed in claim 2 wherein the cargo container (4) is adapted from an ISO 40ft (12.2m) container design.

6. A mobile training unit as claimed in any one of the preceding claims wherein the or each confined working compartment (20) includes one or more internal obstacles.

7. A mobile training unit as claimed in any one of the preceding claims wherein one confined working compartment (20) extends at least partly across the bottom of the cargo container (4), preferably across its width and substantially along its length.

8. A mobile training unit as claimed in any one of the preceding claims comprising a horizontal confined working compartment (24) and a vertical confined working compartment (20).

9. A mobile training unit as claimed in any one of the preceding claims wherein the cargo container (4) comprises one or more manholes, windows or other viewing portals.

10. A mobile training unit as claimed in any one of the preceding claims wherein the tower (44) extends wholly or substantially perpendicular to its transport position within the cargo container (4).

11. A mobile training unit as claimed in any one of the preceding claims wherein the tower (44) extends in its training position from or through a top surface (10) of the cargo container (4).

12. A mobile training unit as claimed in any one of the preceding claims wherein the tower (44) has one or more climbing facilities therealong useable in its training position.

## Patentansprüche

1. Eine mobile Trainingseinheit, beinhaltend einen transportierbaren Frachtcontainer (4) mit einer Transportposition und mindestens einer Trainingsposition, wobei der Frachtcontainer (4) Folgendes beinhaltet:
(a) mindestens einen begrenzten Arbeitsraum (20) gänzlich oder im Wesentlichen innerhalb der Frachtcontainerabmessungen;
(b) mindestens einen Frachtcontainerwandabschnitt (14), der zwischen einer geschlossenen Transportposition und einer offenen Trainingsposition bewegbar ist;
(c) mindestens eine Tür (13) für den Eintritt in den und Austritt aus dem Frachtcontainer (4); und
(d) einen Turm (44), der zwischen einer Transportposition innerhalb der Frachtcontainerabmessungen und einer Trainingsposition, die sich über den Frachtcontainer (4) hinaus erstreckt, bewegbar ist;
**dadurch gekennzeichnet, dass** der Frachtcontainer (4) eine Quaderform mit zwei parallelen länglichen Seitenwänden (6, 8) und einer oberen Oberfläche (10) beinhaltet, wobei mindestens ein Abschnitt jeder länglichen Seitenwand (6, 8) zwischen parallelen geschlossenen Transportpositionen und ausgerichteten offenen Trainingspositionen an jeder Seite der oberen Oberfläche (10) des Frachtcontainers (4), die zusammen eine erhöhte Plattform bilden, die in der Lage ist, einen Moon-Pool-Effekt bereitzustellen, bewegbar ist.

2. Mobile Trainingseinheit gemäß Anspruch 1, wobei der Frachtcontainer (4) in seiner Transportposition gänzlich oder im Wesentlichen quaderförmig ist.

3. Mobile Trainingseinheit gemäß Anspruch 2, wobei der Frachtcontainer (4) die Abmessungen eines 40-ft-ISO-Containers (12,2 m) aufweist.

4. Mobile Trainingseinheit gemäß Anspruch 2, wobei der Frachtcontainer (4) ein 40-ft-ISO-Containerdesign (12,2 m) aufweist.

5. Mobile Trainingseinheit gemäß Anspruch 2, wobei der Frachtcontainer (4) von einem 40-ft-ISO-Containerdesign (12,2 m) angepasst ist.

6. Mobile Trainingseinheit gemäß einem der vorhergehenden Ansprüche, wobei der oder jeder begrenzte Arbeitsraum (20) ein oder mehrere interne Hindernisse umfasst.

7. Mobile Trainingseinheit gemäß einem der vorhergehenden Ansprüche, wobei sich ein begrenzter Arbeitsraum (20) mindestens teilweise über den Boden des Frachtcontainers (4), vorzugsweise über seine Breite und im Wesentlichen entlang seiner Länge, erstreckt.

8. Mobile Trainingseinheit gemäß einem der vorhergehenden Ansprüche, die einen horizontalen begrenzten Arbeitsraum (24) und einen vertikalen begrenzten Arbeitsraum (20) beinhaltet.

9. Mobile Trainingseinheit gemäß einem der vorhergehenden Ansprüche, wobei der Frachtcontainer (4) eine oder mehrere Einsteigöffnungen, ein oder mehrere Fenster oder andere Sichteingänge beinhaltet.

10. Mobile Trainingseinheit gemäß einem der vorhergehenden Ansprüche, wobei sich der Turm (44) gänzlich oder im Wesentlichen senkrecht zu seiner Transportposition innerhalb des Frachtcontainers (4) erstreckt.

11. Mobile Trainingseinheit gemäß einem der vorhergehenden Ansprüche, wobei sich der Turm (44) in seiner Trainingsposition von einer oberen Oberfläche (10) des Frachtcontainers (4) oder durch eine solche erstreckt.

12. Mobile Trainingseinheit gemäß einem der vorhergehenden Ansprüche, wobei der Turm (44) daran entlang eine oder mehrere Klettereinrichtungen aufweist, die in seiner Trainingsposition verwendbar sind.

## Revendications

1. Une unité de formation mobile comprenant un conteneur de fret transportable (4) ayant une position de transport et au moins une position de formation, le conteneur de fret (4) comprenant:
(a) au moins un compartiment de travail confiné (20) entièrement ou substantiellement au sein des dimensions de conteneur de fret ;
(b) au moins une portion de paroi de conteneur de fret (14) déplaçable entre une position de transport fermée et une position de formation ouverte ;
(c) au moins une porte (13) pour une entrée dans le conteneur de fret (4) et une sortie de celui-ci ; et
(d) une tour (44) déplaçable entre une position de transport au sein des dimensions de conteneur de fret, et une position de formation s'étendant au-delà du conteneur de fret (4) ;
**caractérisée en ce que** le conteneur de fret (4) comprend une forme cuboïde ayant deux parois latérales allongées parallèles (6, 8) et une surface de dessus (10), au moins une portion de chaque paroi latérale allongée (6, 8) étant déplaçable entre des positions de transport fermées, et des positions de formation ouvertes alignées sur chaque côté de la surface de dessus (10) du conteneur de fret (4) qui forment ensemble une plateforme surélevée capable de fournir un effet de puit central.

2. Une unité de formation mobile telle que revendiquée dans la revendication 1 dans laquelle le conteneur de fret (4) dans sa position de transport est d'une forme entièrement ou substantiellement cuboïde.

3. Une unité de formation mobile telle que revendiquée dans la revendication 2 dans laquelle le conteneur de fret (4) a les dimensions d'un conteneur ISO de 40 pi (12,2 m).

4. Une unité de formation mobile telle que revendiquée dans la revendication 2 dans laquelle le conteneur de fret (4) a une conception de conteneur ISO de 40 pi (12,2 m).

5. Une unité de formation mobile telle que revendiquée dans la revendication 2 dans laquelle le conteneur de fret (4) est conçu à partir d'une conception de conteneur ISO de 40 pi (12,2 m).

6. Une unité de formation mobile telle que revendiquée dans n'importe laquelle des revendications précédentes dans laquelle le ou chaque compartiment de travail confiné (20) inclut un ou plusieurs obstacles internes.

7. Une unité de formation mobile telle que revendiquée dans n'importe laquelle des revendications précédentes dans laquelle un compartiment de travail confiné (20) s'étend au moins en partie de part et d'autre du fond du conteneur de fret (4), de préférence de part et d'autre de sa largeur et substantiellement le long de sa longueur.

8. Une unité de formation mobile telle que revendiquée dans n'importe laquelle des revendications précédentes comprenant un compartiment de travail confiné horizontal (24) et un compartiment de travail confiné vertical (20).

9. Une unité de formation mobile telle que revendiquée dans n'importe laquelle des revendications précédentes dans laquelle le conteneur de fret (4) comprend un ou plusieurs trous d'homme, fenêtres ou autres portes de visualisation.

10. Une unité de formation mobile telle que revendiquée dans n'importe laquelle des revendications précédentes dans laquelle la tour (44) s'étend de façon entièrement ou substantiellement perpendiculaire à sa position de transport au sein du conteneur de fret (4).

11. Une unité de formation mobile telle que revendiquée dans n'importe laquelle des revendications précédentes dans laquelle la tour (44) s'étend dans sa position de formation depuis ou à travers une surface de dessus (10) du conteneur de fret (4).

12. Une unité de formation mobile telle que revendiquée dans n'importe laquelle des revendications précédentes dans laquelle la tour (44) a une ou plusieurs installations d'escalade le long de celle-ci utilisables dans sa position de formation.
